# EUROPEAN PATENT APPLICATION

(11) **EP 4 424 404 A1**
(43) Date of publication of application: **04.09.2024**
(21) Application number: 23887690.8
(22) Date of filing: 28.09.2023
(51) Int. Cl.: B01D 53/047, B01D 53/053

(54) **PRESSURE SWING ADSORPTION GAS SEPARATION METHOD AND DEVICE FOR VARIABLE-PATH STEP-BY-STEP VOLTAGE SHARING**

(30) Priority: 08.11.2022 CN 202211388349
(71) Applicant: Shandong Gamma Gas Engineering Co., Ltd., Jinan, Shandong 250200 (CN)
(72) Inventor: XU, Jinqi, Jinan, Shandong 250200 (CN); CHEN, Shengfei, Jinan, Shandong 250200 (CN)
(74) Representative: Zaboliene, Reda
(86) International application number: PCT/CN2023/122367
(87) International publication number: WO 2024/098997

(57) **Abstract**

Disclosed are a method and device for stepwise pressure-equalized pressure swing adsorption (PSA) gas separation by changing paths. A pressure equalization process is alternately performed between two groups of adsorbers, where one group performing an equalization depressurization (ED) process is an ED adsorber, while the other group performing an equalization repressurization (ER) process simultaneously is an ER adsorber. Each of the adsorbers has a feed port, an intermediate port, and a discharge port. Gas of the ED adsorber flows out through the discharge port and the intermediate port in the ED process. In the ER process, gas flowing out from the discharge port flows through the discharge port and intermediate port, and gas flowing out from the intermediate port flows through the intermediate port and the feed port, or flows in through one of the intermediate port and feed port.

## Description

### TECHNICAL FIELD

The present disclosure relates to a technical field of pressure swing adsorption (PSA) gas separation, and specifically, to a method and device for stepwise pressure-equalized PSA gas separation by changing paths.

### BACKGROUND

The PSA gas separation technology obtains a target gas product by cyclically performing repressurization and adsorption steps and depressurization and desorption steps based on different adsorbing capacities of surfaces of adsorbent micropores for adsorbing gas molecules under different pressure. As a widely used energy-saving technology in the field of the PSA gas separation technology, pressure equalization is intended to recover valuable gas that remains in an adsorber after adsorption ends, thereby improving a recovery rate of product gas, and reducing an energy consumption.

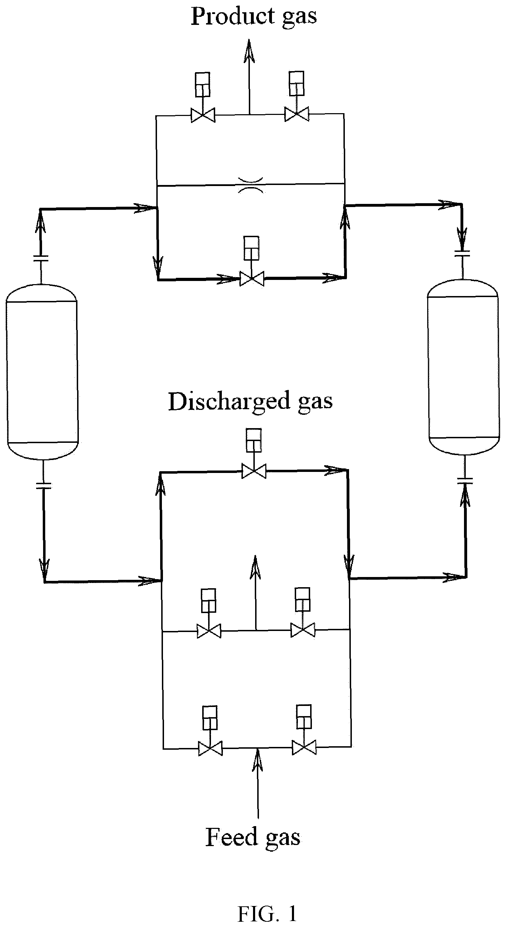

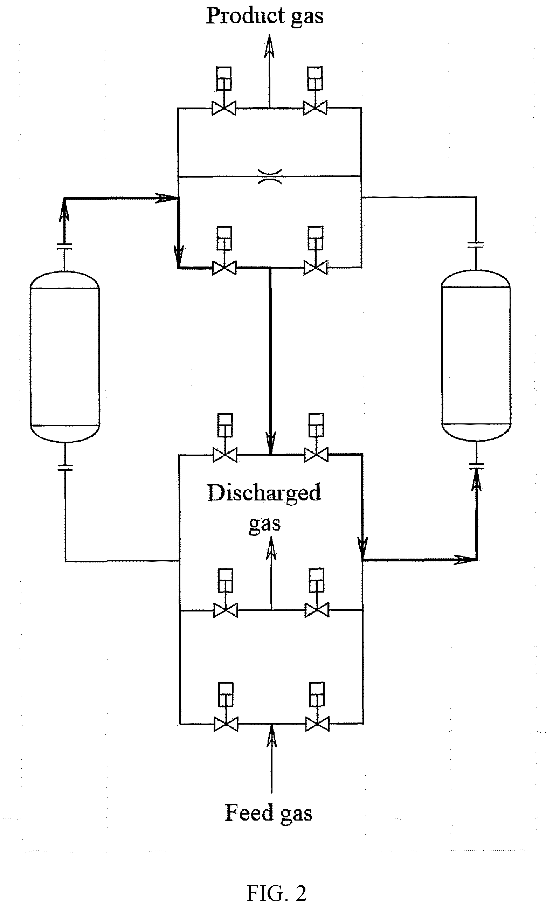

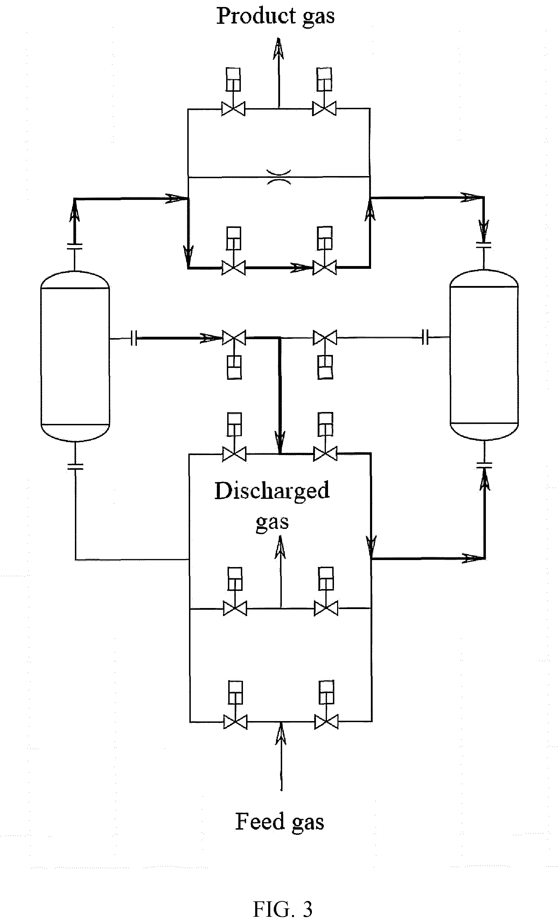

The adsorber is a separation container filled with an adsorbent. A PSA gas separation device using a plurality of adsorbers for a plurality of multi-step pressure equalization operations is commonly used to improve the recovery rate. However, a PSA gas separation device using two adsorbers, such as a PSA gas separation device, can only support one pressure equalization operation between the two adsorbers, resulting in a low recovery rate. In addition, after the pressure equalization, purity inversion commonly occurs in an adsorbent bed at a discharge end of an equalization repressurization (ER) adsorber, resulting in low product purity. In an adsorption process of the PSA gas separation technology, a product gas purity formed by purity of gaseous phase gas from a feed port of feed gas to a discharge port of product gas in the adsorber gradually increases. The purity inversion is a phenomenon that after the pressure equalization is achieved between two groups of adsorbers, purity of gaseous phase gas of the adsorbent bed of the ER adsorber near the discharge port is less (lower) than purity of the gaseous phase gas near the feed port. At present, the following pressure equalization methods are commonly used: (1) The pressure equalization is synchronously performed between discharge ends, and between feed ends, as shown in FIG. 1. (2) The pressure equalization is performed from the discharge end to the feed end through single-path cocurrent gas depressurization, as shown in FIG. 2. (3) The pressure equalization is synchronously performed between the discharge ends, and from an intermediate end to the feed end, as shown in FIG. 3. During the above PSA gas separation, for an equalization depressurization (ED) adsorber (supply side), the pressure equalization process is a depressurization and desorption process. Therefore, supplied gas contains two parts: One part is a residual gaseous phase component (namely, gap gas) in gaps between particles in the adsorbent bed in the adsorber, and this part conforms to a purity distribution of the gaseous phase gas in the adsorbent bed at a late stage of the adsorption and has high purity. The other part is an adsorbed phase component (namely, desorbed gas) desorbed by the adsorbent, and has low purity. Based on the aforementioned reason (of the supply side), for the discharge end of the ER adsorber (recovery side), gas recovered in an early stage of the pressure equalization is mainly the gap gas, and gas recovered in a later stage of the pressure equalization is mainly the desorbed gas. Throughout the entire process, purity of recovered pressure-equalized gas gradually decreases, resulting in the purity inversion on the gaseous phase gas in the adsorbent bed at the discharge end of the ER adsorber. Furthermore, after the desorption ends, there is still about 5% to 10% of an easily-adsorbable component in the adsorbent bed at the feed end of the ER adsorber. In an ER process, the gas (i.e., the easily-adsorbable component) is driven to the discharge end in the adsorbent bed by the recovered pressure-equalized gas at the feed end. As a result, the purity of the gap gas at the discharge end decreases, and an ideal adsorption front is disrupted. In the aforementioned pressure equalization method (1), purity of the gas in the adsorbent bed at the discharge end of the ER adsorber (recovery side) is seriously inverted. In the aforementioned pressure equalization method (2), an unused adsorption capacity of the adsorbent bed at the discharge end of the ED adsorber (supply side) is utilized to improve the purity of the gap gas and the desorbed gas, thereby improving the recovery rate. However, the easily-adsorbable component remaining in the adsorbent bed at the feed end of the ER adsorber (recovery side) is driven to the discharge end of the adsorber, and the purity inversion remains unchanged. In the aforementioned pressure equalization method (3), the unused adsorption capacity of the adsorbent bed at the discharge end of the ED adsorber (supply side) is partially utilized, thereby improving the purity of the gap gas and the desorbed gas to a certain degree. However, the purity inversion at the discharge end of the ER adsorber (recovery side) is not decreased compared with that in the pressure equalization method (1). For example, the Chinese patent CN99101651.3 even makes no explanation for the inversion of the gas purity of the adsorbent bed.

All the above conventional pressure equalization methods use one step to complete the entire pressure equalization process, and keep a pressure equalization path unchanged throughout the entire pressure equalization process, which can be referred to as fixed-path single-step pressure equalization methods. All these methods result in significant inversion of the gas purity of the adsorbent bed, making it difficult to produce high-purity gas. In practical applications, target purity is usually achieved at the expense of a production capacity of a device, which means an increase in the energy consumption. Therefore, it is particularly important to maximally eliminate or reduce negative factors that affect purity of the product gas.

### SUMMARY

In order to resolve the above problems, the present disclosure provides a method and device for stepwise pressure-equalized PSA gas separation by changing paths, to provide technical feasibility for producing high-purity gas by using a PSA technology at a low cost.

In order to resolve the technical problems, the present disclosure adopts following technical solutions:

According to one aspect, an embodiment of the present disclosure provides a method for stepwise pressure-equalized PSA gas separation by changing paths, where a pressure equalization process of PSA gas separation is alternately performed between two groups of adsorbers, where one group performing an ED process is referred to as an ED adsorber, while the other group performing an ER process simultaneously is referred to as an ER adsorber; each of the adsorbers is provided with a feed port, an intermediate port, and a discharge port; the discharge port and the intermediate port of the ED adsorber are gas outlets, and the feed port, the intermediate port, and the discharge port of the ER adsorber are gas inlets; gas of the ED adsorber flows out synchronously or step by step in sequence through the discharge port and the intermediate port of the ED adsorber in the ED process; and in the ER process of the ER adsorber, gas flowing out from the discharge port of the ED adsorber flows into the ER adsorber step by step in sequence through the discharge port and intermediate port of the ER adsorber, and gas flowing out from the intermediate port of the ED adsorber flows into the ER adsorber step by step in sequence through the intermediate port and the feed port of the ER adsorber, or flows into the ER adsorber through one of the intermediate port and the feed port of the ER adsorber.

As a possible implementation of this embodiment, the pressure equalization process includes following steps (1) to (4), any three consecutive steps of following steps (1) to (4), or any two consecutive steps of following steps (2) to (4):
step (1): connecting the discharge port of the ED adsorber and the discharge port of the ER adsorber to perform stepwise pressure-equalized PSA gas separation, where the ED adsorber performs an "equalization 1 depressurization (E1D)" step, and the ER adsorber performs an "equalization 1 repressurization (E1R)" step;
step (2): connecting the discharge port of the ED adsorber and the discharge port of the ER adsorber, and connecting the intermediate port of the ED adsorber and the intermediate port of the ER adsorber to perform the stepwise pressure-equalized PSA gas separation, where the ED adsorber performs an "equalization 2 depressurization (E2D)" step, and the ER adsorber performs an "equalization 2 repressurization (E2R)" step;
step (3): connecting the discharge port of the ED adsorber and the discharge port of the ER adsorber, and connecting the intermediate port of the ED adsorber and the feed port of the ER adsorber to perform the stepwise pressure-equalized PSA gas separation, where the ED adsorber performs an "equalization 3 depressurization (E3D)" step, and the ER adsorber performs an "equalization 3 repressurization (E3R)" step; and
step (4): connecting the discharge port of the ED adsorber and the intermediate port of the ER adsorber, and connecting the intermediate port of the ED adsorber and the feed port of the ER adsorber to perform the stepwise pressure-equalized PSA gas separation, where the ED adsorber performs an "equalization 4 depressurization (E4D)" step, and the ER adsorber performs an "equalization 4 repressurization (E4R)" step.

As a possible implementation of this embodiment, the two groups of adsorbers (T) each undergo a repetitive cycle including following steps (1) to (10), or any three consecutive steps of following steps (2) to (5), or any two consecutive steps of following steps (3) to (5), and steps (7) to (10) that are synchronously associated with the steps (2) to (5) respectively require to exist or be canceled simultaneously:
(1) repressurization and adsorption: introducing feed gas (further including product gas in an early stage of repressurization) to repressurize an adsorbent bed, whereby an easily-adsorbable component is adsorbed and a difficultly-adsorbable component flows out as the product gas through the discharge port;
(2) E1D: performing, by the ED adsorber, the "E1D" step, and performing, by the other group of adsorbers as the ER adsorber, the "E1R" step synchronously;
(3) E2D: performing, by the ED adsorber, the "E2D" step, and performing, by the other group of adsorbers as the ER adsorber, the "E2R" step synchronously;
(4) E3D: performing, by the ED adsorber, the "E3D" step, and performing, by the other group of adsorbers as the ER adsorber, the "E3R" step synchronously;
(5) E4D: performing, by the ED adsorber, the "E4D" step, and performing, by the other group of adsorbers as the ER adsorber, the "E4R" step synchronously;
(6) depressurization and desorption: reversely discharging gap gas and desorbed gas of the adsorbent bed, to depressurize the adsorber to normal or negative pressure, whereby an adsorbent is regenerated, and the discharged gas is waste gas or is collected and utilized as by-product gas;
(7) E1R: performing, by the ER adsorber, the "E1R" step, and performing, by the other group of adsorbers as the ED adsorber, the "E1D" step synchronously;
(8) E2R: performing, by the ER adsorber, the "E2R" step, and performing, by the other group of adsorbers as the ED adsorber, the "E2D" step synchronously;
(9) E3R: performing, by the ER adsorber, the "E3R" step, and performing, by the other group of adsorbers as the ED adsorber, the "E3D" step synchronously; and
(10) E4R: performing, by the ER adsorber, the "E4R" step, and performing, by the other group of adsorbers as the ED adsorber, the "E4D" step synchronously.

As a possible implementation of this embodiment, a backward product gas purging step can also be introduced between the steps (2) to (6) to use the product gas to backward purge the adsorbent bed of the adsorber.

As a possible implementation of this embodiment, the discharged gas is silenced by using a silencer in a discharging process, and the product gas is buffered by using a buffer tank before flowing out.

According to another aspect, an embodiment of the present disclosure provides a device for stepwise pressure-equalized PSA gas separation by changing paths, including at least two groups of adsorbers, where each of the adsorbers is provided with a feed port, an intermediate port, and a discharge port; the feed port is connected to a main feed gas pipeline through a first pipeline via a first program-controlled valve, and to a desorbed gas pipeline through the first pipeline via a second program-controlled valve; the discharge port is connected to a product gas pipeline through a third pipeline via a third program-controlled valve, and a purging pipeline is disposed between the discharge ports; the intermediate port is connected to a first pressure equalization pipeline through a second pipeline via a fifth program-controlled valve, and to a second pressure equalization pipeline through the second pipeline via a sixth program-controlled valve; the discharge port is connected to the first pressure equalization pipeline through the third pipeline via a fourth program-controlled valve; the feed port is connected to the second pressure equalization pipeline through the first pipeline via a seventh program-controlled valve; the second pipeline, the fifth program-controlled valve, the first pressure equalization pipeline, the sixth program-controlled valve, the second pressure equalization pipeline, the third pipeline, the fourth program-controlled valve, the first pipeline, and the seventh program-controlled valve form a pressure equalization pipeline network; and mutual connection between the discharge ports of the two groups of adsorbers, between the discharge port of one group of adsorbers and the intermediate port of the other group of adsorbers, between the intermediate ports of the two groups of adsorbers, and between the intermediate port of one group of adsorbers and the feed port of the other group of adsorbers is achieved by opening and closing corresponding program-controlled valves.

As a possible implementation of this embodiment, the adsorber is internally filled with at least one of adsorbents, and the adsorbent is made of a carbon molecular sieve, a zeolite molecular sieve, a 5A molecular sieve, activated carbon, or activated alumina.

As a possible implementation of this embodiment, one group of adsorbers are of a single-stage structure or a two-stage cascaded structure, one group of adsorbers with the single-stage structure include one adsorber, and one group of adsorbers with the two-stage cascaded structure include two cascaded adsorbers.

As a possible implementation of this embodiment, the intermediate port of the adsorber with the single-stage structure is connected to a gas diverting and collecting device installed inside the adsorber, and a ventilation port of the gas diverting and collecting device is located at any location between 30% and 80% of total mass of the adsorbent bed.

As a possible implementation of this embodiment, the intermediate port of one group of adsorbers with the two-stage cascaded structure is connected to a cascaded pipeline of the two cascaded adsorbers included in the one group of adsorbers, and the cascaded pipeline is located at any location between 30% and 80% of total mass of adsorbent beds of the two cascaded adsorbers.

The technical solutions of the embodiments of the present disclosure have following beneficial effects:
Firstly, a method for stepwise pressure equalization by changing paths and its implementation scheme are provided. The method for stepwise pressure equalization by changing paths improves inversion of gas purity of an adsorbent bed of an ER adsorber due to a pressure equalization process. Secondly, a device is provided to apply the aforementioned method for stepwise pressure equalization by changing paths to a PSA gas separation process. This not only improves purity of gap gas and desorbed gas that flow out from an ED adsorber (supply side) during pressure equalization, but also makes the gap gas and the desorbed gas be reasonably classified and utilized in different locations on the ER adsorber (recovery side) by changing paths and a stepwise pressure equalization method. In this way, inversion of gas purity at a discharge end of the adsorbent bed of the ER adsorber is suppressed. The solutions of the present disclosure provide technical feasibility for producing high-purity gas by using a PSA technology at a low cost.

The present disclosure flexibly selects a suitable pressure equalization step combination based on characteristics of various adsorbents and requirements for different target purity to select an optimal pressure equalization path through fine adjustment; flexibly allocates or adjusts duration of each pressure equalization step based on characteristics of each device to further achieve a best pressure equalization effect through precise adjustment; and changes a quantity of pressure equalization steps and duration of each pressure equalization step based on changes in feed gas parameters, target purity of product gas, and other requirements without stopping the device. The present disclosure adopts the method for stepwise pressure equalization by changing paths. This can obtain a high-purity product under a same yield or increase a yield under same purity, thereby reducing a gas production cost.

### BRIEF DESCRIPTION OF THE DRAWINGS

FIG. 1 is a schematic diagram of a pressure equalization method in the prior art, which is characterized by synchronous pressure equalization between discharge ends, and between feed ends;
FIG. 2 is a schematic diagram of a pressure equalization method in the prior art, which is characterized by synchronous pressure equalization form a discharge end to a feed end;
FIG. 3 is a schematic diagram of a pressure equalization method in the prior art, which is characterized by synchronous pressure equalization between discharge ends, and from an intermediate end to a feed end;
FIG. 4 to FIG. 7 are flowcharts of gas flow directions and paths corresponding to four steps of a process in which stepwise pressure equalization is performed on two groups of adsorbers with a single-stage structure by changing paths according to an exemplary embodiment, where FIG. 4 shows a first step, FIG. 5 shows a second step, FIG. 6 shows a third step, and FIG. 7 shows a fourth step;
FIG. 8 to FIG. 11 are flowcharts of gas flow directions and paths corresponding to four steps of a process in which stepwise pressure equalization is performed on two groups of adsorbers with a two-stage cascaded structure by changing paths according to an exemplary embodiment, where FIG. 8 shows a first step, FIG. 9 shows a second step, FIG. 10 shows a third step, and FIG. 11 shows a fourth step;
FIG. 12 is a schematic structural diagram of a device for stepwise pressure-equalized PSA gas separation by changing paths according to an exemplary embodiment;
FIG. 13 is a schematic structural diagram of another device for stepwise pressure-equalized PSA gas separation by changing paths according to an exemplary embodiment;
FIG. 14 is a schematic structural diagram of another device for stepwise pressure-equalized PSA gas separation by changing paths according to an exemplary embodiment;
FIG. 15 is a schematic diagram of a PSA cycle of a device for stepwise pressure-equalized PSA gas separation by changing paths according to an exemplary embodiment;
FIG. 16 is a schematic diagram of a PSA cycle of a device for stepwise pressure-equalized PSA gas separation by changing paths according to an exemplary embodiment; and
FIG. 17 is a schematic diagram of a PSA cycle of a device for stepwise pressure-equalized PSA gas separation by changing paths according to an exemplary embodiment.

### DETAILED DESCRIPTION

The present disclosure will be further described with reference to the accompanying drawings and embodiments.

In order to describe the technical features of the technical solutions of the present disclosure clearly, the present disclosure will be described in detail below with reference to the specific implementations and the accompanying drawings. The following disclosure provides many different embodiments or examples for implementing different structures of the present disclosure. In order to simplify the present disclosure, the components and settings of specific examples are described below. In addition, the present disclosure may repeat reference numbers and/or letters in different examples. This repetition is intended for simplification and clarity, rather than to indicate the relationship between the various embodiments and/or settings discussed. It should be noted that the components illustrated in the accompanying drawings are not necessarily drawn to scale. The present disclosure omits descriptions of well-known components and processing techniques and processes to avoid unnecessarily limiting the present disclosure.

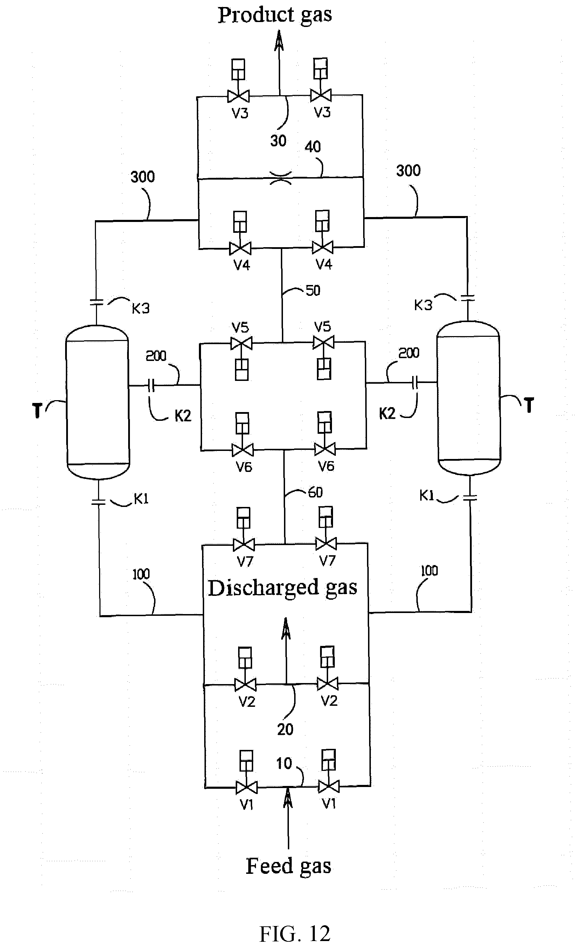

As shown in FIG. 12 to FIG. 14, an embodiment of the present disclosure provides a device for stepwise pressure-equalized PSA gas separation by changing paths, including at least two groups of adsorbers T. Each of the adsorbers T is provided with a feed port K1, an intermediate port K2, and a discharge port K3. The feed port K1 is connected to a main feed gas pipeline 10 through a first pipeline 100 via a first program-controlled valve V1, and to a desorbed gas pipeline 20 through the first pipeline 100 via a second program-controlled valve V2. The discharge port K3 is connected to a product gas pipeline 30 through a third pipeline 300 via a third program-controlled valve V3, and a purging pipeline 40 is disposed between the discharge ports K3. The intermediate port K2 is connected to a first pressure equalization pipeline 50 through a second pipeline 200 via a fifth program-controlled valve V5, and to a second pressure equalization pipeline 60 through the second pipeline 200 via a sixth program-controlled valve V6. The discharge port K3 is connected to the first pressure equalization pipeline 50 through the third pipeline 300 via a fourth program-controlled valve V4. The feed port K1 is connected to the second pressure equalization pipeline 60 through the first pipeline 100 via a seventh program-controlled valve V7. The second pipeline 200, the fifth program-controlled valve V5, the first pressure equalization pipeline 50, the sixth program-controlled valve V6, the second pressure equalization pipeline 60, the third pipeline 300, the fourth program-controlled valve V4, the first pipeline 100, and the seventh program-controlled valve V7 form a pressure equalization pipeline network. Mutual connection between the discharge ports K3 of the two groups of adsorbers T, between the discharge port K3 of one group of adsorbers and the intermediate port K2 of the other group of adsorbers, between the intermediate ports K2 of the two groups of adsorbers T, and between the intermediate port K2 of one group of adsorbers and the feed port K1 of the other group of adsorbers is achieved by opening and closing corresponding program-controlled valves.

As a possible implementation of this embodiment, the adsorber T is internally filled with at least one of adsorbents, and the adsorbent is made of a carbon molecular sieve, a zeolite molecular sieve, a 5A molecular sieve, activated carbon, or activated alumina.

As a possible implementation of this embodiment, one group of adsorbers T are of a single-stage structure or a two-stage cascaded structure, one group of adsorbers with the single-stage structure include one adsorber, and one group of adsorbers with the two-stage cascaded structure include two cascaded adsorbers. The adsorber with the single-stage structure is a horizontal axial flow adsorber, a vertical axial flow adsorber, or a vertical radial flow adsorber. The adsorber with the two-stage cascaded structure is a horizontal axial flow adsorber, a vertical axial flow adsorber, or a vertical radial flow adsorber.

As a possible implementation of this embodiment, the intermediate port K2 of an adsorber with the single-stage structure is connected to a gas diverting and collecting device installed inside the adsorber, and a ventilation port of the gas diverting and collecting device is located at any location between 30% and 80% of total mass of the adsorbent bed. The ventilation port is an airflow channel through which gas of the adsorbent bed flows into and out from the gas diverting and collecting device, and is distributed on a shell of the gas diverting and collecting device.

As a possible implementation of this embodiment, the intermediate port K2 of one group of adsorbers with the two-stage cascaded structure is connected to a cascaded pipeline of the two cascaded adsorbers included in the one group of adsorbers, and the cascaded pipeline is located at any location between 30% and 80% of total mass of adsorbent beds of the two cascaded adsorbers.

According to the method for stepwise pressure-equalized PSA gas separation by changing paths in this embodiment of the present disclosure, the pressure equalization process of the PSA gas separation is alternately performed between the two groups of adsorbers, where the one group performing the ED process is referred to as the ED adsorber, while the other group performing the ER process simultaneously is referred to as the ER adsorber. Each of the adsorbers T is provided with the feed port K1, the intermediate port K2, and the discharge port K3. The discharge port K3 and the intermediate port K2 of the ED adsorber are the gas outlets, and the feed port K1, the intermediate port K2, and the discharge port K3 of the ER adsorber are the gas inlets. The gas of the ED adsorber flows out synchronously or step by step in sequence through the discharge port K3 and the intermediate port K2 of the ED adsorber in the ED process. In addition, in the ER process, the gas flowing out from the discharge port K3 of the ED adsorber flows into the ER adsorber step by step in sequence through the discharge port K3 and intermediate port K2 of the ER adsorber, and the gas flowing out from the intermediate port K2 of the ED adsorber flows into the ER adsorber step by step in sequence through the intermediate port K2 and the feed port K1 of the ER adsorber, or flows into the ER adsorber through one of the intermediate port K2 and the feed port K1 of the ER adsorber.

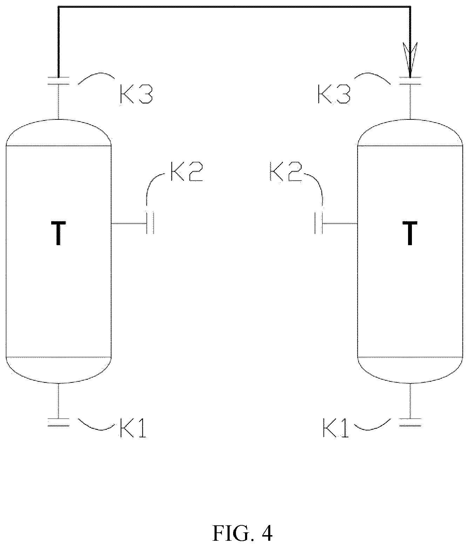

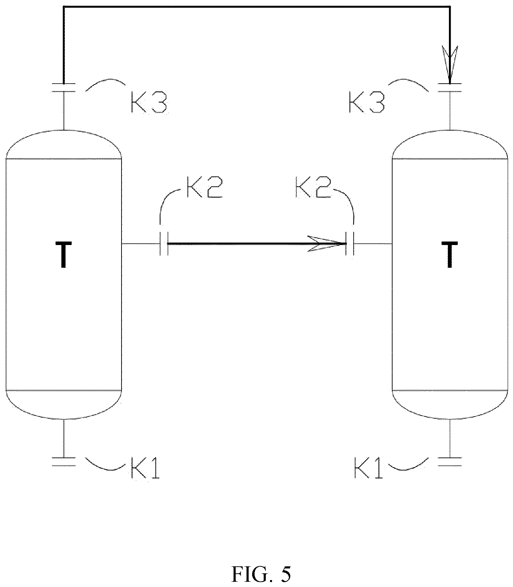

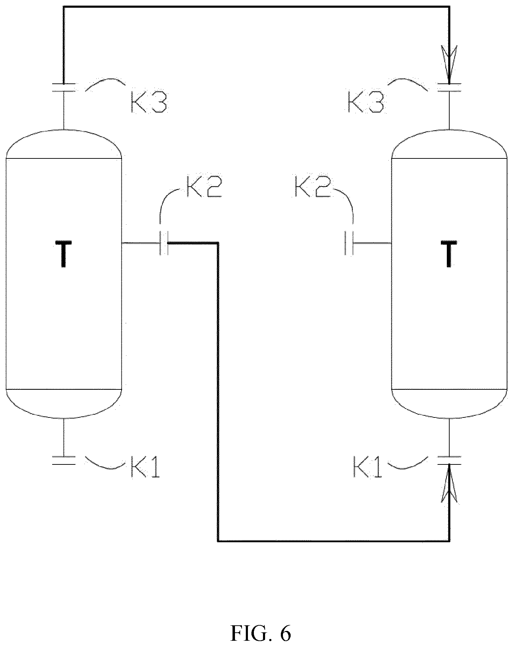

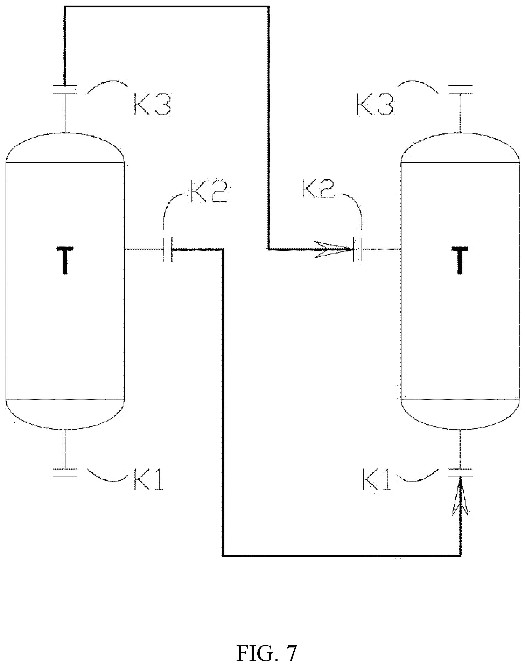

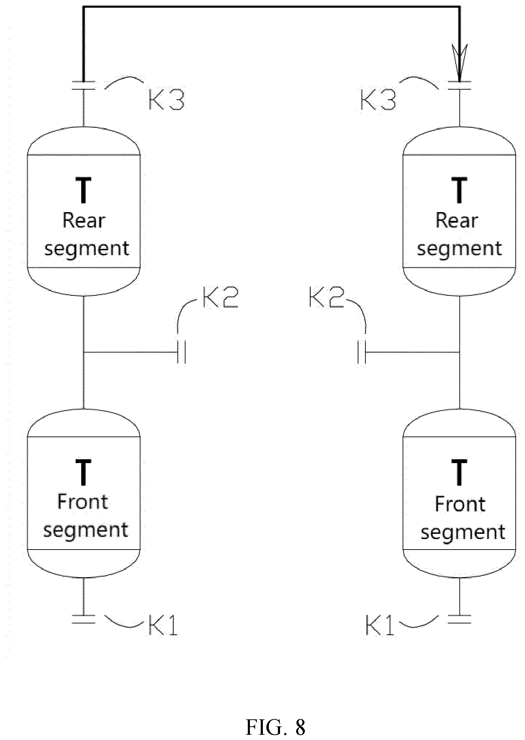

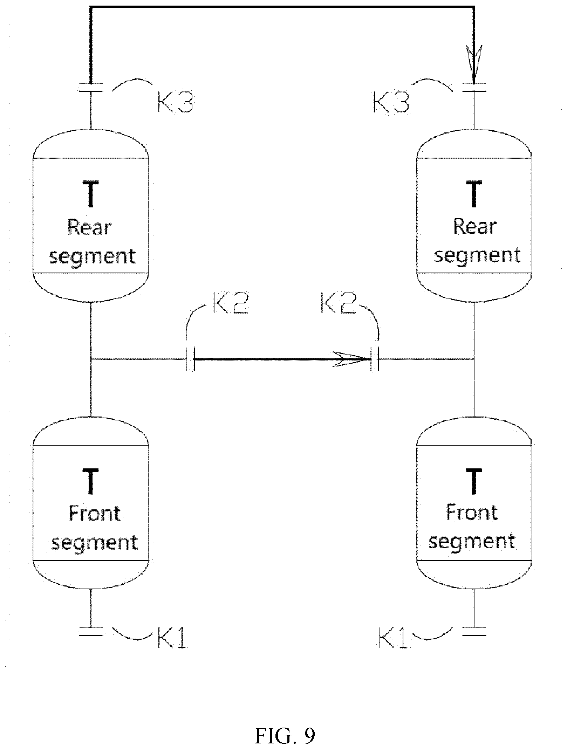

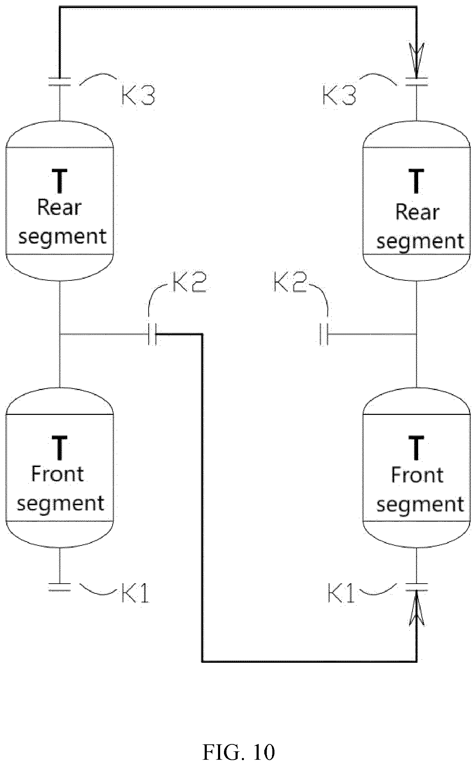

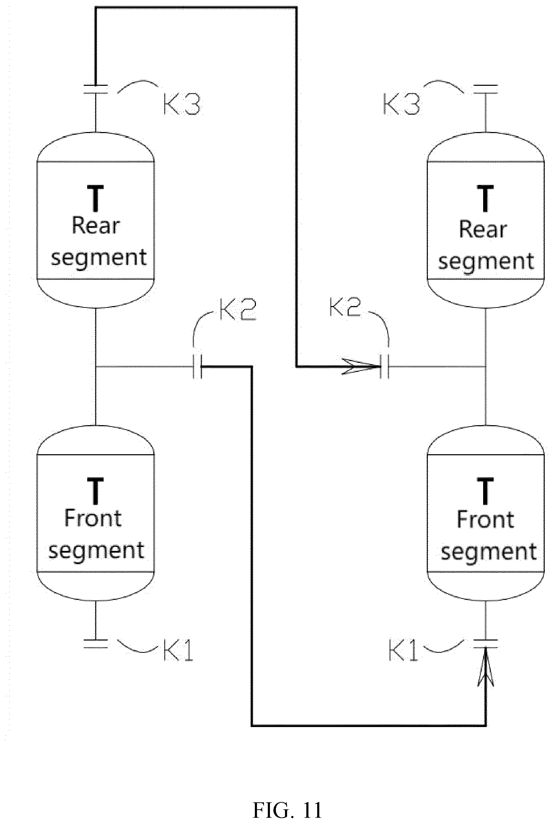

FIG. 4 to FIG. 7 show gas flow directions and paths corresponding to following four steps of a pressure equalization process of two groups of adsorbers with the single-stage structure. FIG. 8 to FIG. 11 show gas flow directions and paths corresponding to following four steps of a pressure equalization process of two groups of adsorbers with the two-stage cascaded structure. As a possible implementation of this embodiment, as shown in FIG. 4 to FIG. 11, the pressure equalization process includes following steps (1) to (4), any three consecutive steps of following steps (1) to (4), or any two consecutive steps of following steps (2) to (4).

Step (1): Connect the discharge port K3 of the ED adsorber and the discharge port K3 of the ER adsorber to perform stepwise pressure-equalized PSA gas separation, where the ED adsorber performs an "E1D" step, and the ER adsorber performs an "E1R" step. This step recovers valuable product gas by using high-purity gap gas containing a difficultly-adsorbable component in the adsorbent bed at the discharge port K3 of the ED adsorber, and further performs backward regeneration on the adsorbent bed at a discharge end of the ER adsorber, reducing a consumption of product gas for regeneration. This step mainly focuses on recovering and utilizing high-purity gap gas in a bed layer at a discharge end of the ED adsorber.

Step (2): Connect the discharge port K3 of the ED adsorber and the discharge port K3 of the ER adsorber, and connect the intermediate port K2 of the ED adsorber and the intermediate port K2 of the ER adsorber to perform the stepwise pressure-equalized PSA gas separation, where the ED adsorber performs an "E2D" step, and the ER adsorber performs an "E2R" step. Due to the intermediate port K2, pressure-equalized shunting is formed in an intermediate-stage adsorbent bed of the ED adsorber. As a result, contamination of the adsorbent bed at the discharge port K3 by adsorbed gas (feed end) is delayed, and the purity of the gap gas is maintained. Therefore, purity of the adsorbent bed at the discharge port K3 of the ER adsorber is still not inverted. At this time, gas from the intermediate-stage adsorbent bed of the ED adsorber is still mainly high-purity gap gas. After entering an intermediate-stage adsorbent bed of the ER adsorber, the high-purity gap gas is driven and guided by the high-purity gap gas entering the discharge port K3 backward, and flows into a feed port K1 side backward. Therefore, desorbed gas remaining in the adsorbent bed on the feed port K1 side in a previous cycle can be compressed, reducing backward damage caused by subsequent pressure equalization steps to gas purity of the adsorbent bed. This step mainly focuses on recovering the high-purity gap gas in the adsorbent bed at the discharge end of the ED adsorber and sub-high-purity gap gas in the intermediate-stage bed layer. Upon the steps (1) and (2), the desorbed gas remaining in the adsorbent bed on the feed port K1 side of the ER adsorber in the previous cycle flows backward and is compressed. After an adsorption front is pushed backward, the inversion of the purity is suppressed.

Step (3): Connect the discharge port K3 of the ED adsorber and the discharge port K3 of the ER adsorber, and connect the intermediate port K2 of the ED adsorber and the feed port K1 of the ER adsorber to perform the stepwise pressure-equalized PSA gas separation, where the ED adsorber performs an "E3D" step, and the ER adsorber performs an "E3R" step. Gas from the intermediate port K2 of the ED adsorber first enters the intermediate port K2 of the ER adsorber and then enters the feed port K1 of the ER adsorber. This prevents the intermediate-stage adsorbent bed of the ER adsorber from being contaminated due to a continuous decrease in purity of incoming gas. In this case, pressure of the entire bed layer has gradually increased, a gas flow rate has gradually decreased, and an adsorption rate has adapted. In the previous cycle, the desorbed gas remaining in the adsorbent bed on the feed port K1 side of the ER adsorber is re-adsorbed as the pressure increases, thus suppressing the inversion of the gas purity of the adsorbent bed. This step mainly focuses on recovering the high-purity gap gas in the adsorbent bed at the discharge end of the ED adsorber, low-purity gap gas containing a low-content difficultly-adsorbable component in the intermediate-stage adsorbent bed, and the desorbed gas.

Step (4): Connect the discharge port K3 of the ED adsorber and the intermediate port K2 of the ER adsorber, and connect the intermediate port K2 of the ED adsorber and the feed port K1 of the ER adsorber to perform the stepwise pressure-equalized PSA gas separation, where the ED adsorber performs an "E4D" step, and the ER adsorber performs an "E4R" step. Gas from the discharge port K3 of the ED adsorber enters the intermediate port K2 from the discharge port K3 of the ER adsorber. This prevents the adsorbent bed at the discharge port K3 of the ER adsorber from being contaminated due to a continuous decrease in purity of incoming gas, thereby suppressing the inversion of the gas purity of the adsorbent bed. This step mainly focuses on recovering high-purity gap gas containing a difficulty-adsorbable component and adsorbed gas at the discharge end of the ED adsorber, and lower-purity gap gas containing a lower-content difficulty-adsorbable component and adsorbed gas in the intermediate stage.

An adsorption and separation process is a process in which a gaseous phase concentration of a difficultly-adsorbable component gradually increases along a feed flow direction. The present disclosure not only improves purity of gap gas and desorbed gas of the ED adsorber (supply side), but also makes the gap gas and the desorbed gas be reasonably classified and utilized in different locations on the ER adsorber (recovery side) by changing paths and a stepwise pressure equalization method. In this way, the inversion of the gas purity of the adsorbent bed is suppressed.

In practical implementation, a quantity of the above steps and duration of each step are directly affected by factors such as a type and performance of an adsorbent, a structure of the adsorber, target purity of the product gas, and a flow rate. In other words, it is allowed and necessary to reasonably select all or part of the above steps, but only a stepwise step by changing the paths can be selected.

Based on arrangement of the aforementioned steps in this solution, a simple and feasible solution is provided for implementing a method for stepwise pressure equalization by changing paths, which is easily programmed into a programmable logic controller (PLC) control program and easily selected or switched. The simple and feasible solution includes following content:
1. When duration of a step is set to 0, another step combination and another step quantity combination can be used to provide a plurality of processes of performing stepwise pressure equalization by changing the paths, thereby selecting a best pressure equalization path through fine adjustment.
2. It is easy to allocate or set the duration of each step, thereby further achieving a better voltage equalization effect through precise adjustment.

FIG. 12 is a schematic structural diagram of a device for stepwise pressure-equalized PSA gas separation by changing paths according to an exemplary embodiment. As shown in FIG. 12, when the PSA gas separation device is applied to a PSA gas separation process, a pressure equalization process between two groups of adsorbers includes following steps:
Step (1): After completing repressurization and adsorption and closing a first program-controlled valve V1, perform an operation in this step. Programmable valves V4 of the two groups of adsorbers T are opened synchronously. In this case, discharge ports K3 of the two groups of adsorbers T are connected. An ED adsorber performs an "E1D" step, and an ER adsorber performs an "E1R" step.
Step (2): Keep the program-controlled valves V4 of the two groups of adsorbers T open, and synchronously open program-controlled valves V6 of the two groups of adsorbers T. In this case, the discharge ports K3 of the two groups of adsorbers T are connected, and intermediate ports K2 of the two groups of adsorbers T are connected. The ED adsorber performs an "E2D" step, and the ER adsorber performs an "E2R" step.
Step (3): Keep the program-controlled valves V4 of the two groups of adsorbers T open, close the program-controlled valve V6 of the ER adsorber, and synchronously open a program-controlled valve V7 of the ER adsorber. In this case, the discharge ports K3 of the two groups of adsorbers T are connected, and the intermediate port K2 of the ED adsorber is connected to a feed port K1 of the ER adsorber. The ED adsorber performs an "E3D" step, and the ER adsorber performs an "E3R" step.
Step (4): Close the program-controlled valve V4 of the ER adsorber, open a program-controlled valve V5 of the ER adsorber, keep the program-controlled valve V6 of the ED adsorber, and synchronously open the program-controlled valve V7 of the ER adsorber. In this case, the discharge port K3 of the ED adsorber is connected to the intermediate port K2 of the ER adsorber, and the intermediate port K2 of the ED adsorber is connected to the feed port K1 of the ER adsorber. The ED adsorber performs an "E4D" step, and the ER adsorber performs an "E4R" step.

The present disclosure provides a method for applying, based on the PSA gas separation device shown in FIG. 12, the method for stepwise pressure equalization by changing paths to the PSA gas separation process. Specifically, each group of adsorbers T undergoes a repeated cycle including following operation steps, and the program-controlled valves directly connected to the adsorbers T are opened or closed in following order to achieve the repeated cycle:
(1) Repressurization and adsorption: Open the program-controlled valves V1 and V3, and continuously introduce feed gas through the feed port K1 (further introduce product gas backward through the discharge port K3 in an early stage of repressurization) to repressurize an adsorbent bed, whereby an easily-adsorbable component is adsorbed and a difficultly-adsorbable component flows out as the product gas through the discharge port K3. The program-controlled valves V1 and V3 are closed after the adsorption is completed. This step is synchronously performed with a step (6) performed by the other group of adsorbers T.
(2) E1D: Open the program-controlled valve 4, and perform the "E1D" step. This step is synchronously performed with a step (7), namely, the "E1R" step, performed by the other group of adsorbers T.
(3) E2D: Open the program-controlled valve V6, and perform the "E2D" step. This step is synchronously performed with a step (8), namely, the "E2R" step, performed by the other group of adsorbers T.
(4) E3D: Keep the program-controlled valves V4 and V6 open, and perform the "E3D" step. This step is synchronously performed with a step (9), namely, the "E3R" step, performed by the other group of adsorbers T.
(5) E4D: Keep the program-controlled valves V4 and V6 open, perform the "E5D" step, and close the program-controlled valves V4 and V6 after completing this step. This step is synchronously performed with a step (10), namely, the "E4R" step, performed by the other group of adsorbers T.
(6) Depressurization and desorption: Open a program-controlled valve V2, backward discharge gap gas and desorbed gas to depressurize the adsorbent bed to normal or negative pressure for regeneration, whereby the discharged gas is waste gas or is collected and utilized as by-product gas, and close the program-controlled valve V2 after completing this operation. This step is synchronously performed with the step (1) performed by the other group of adsorbers T.
(7) E1R: Open the program-controlled valve 4, and perform the "E1R" step. This step is synchronously performed with the step (2), namely, the "E1D" step, performed by the other group of adsorbers T.
(8) E2R: Open the program-controlled valve V6, perform the "E2R" step, and close the program-controlled valve V6 after completing this step. This step is synchronously performed with the step (3), namely, the "E2D" step, performed by the other group of adsorbers T.
(9) E3R: Keep the program-controlled valve V4 open, open the program-controlled valve V7, perform the "E3R" step, and close the program-controlled valves V4 after completing this step. This step is synchronously performed with the step (4), namely, the "E3D" step, performed by the other group of adsorbers T.
(10) E4R: Keep the program-controlled valve V7 open, open the program-controlled valve V5, perform the "E4R" step, and close the program-controlled valves V7 and V5 after completing this step. This step is synchronously performed with the step (5), namely, the "E4D" step, performed by the other group of adsorbers T.

As a possible implementation of this embodiment, a backward product gas purging step can also be introduced between the steps (2) to (6) to use the product gas to backward purge the adsorbent bed of the adsorber T. In this way, the adsorbent bed is regenerated more thoroughly.

As a possible implementation of this embodiment, in the PSA gas separation process, in addition to undergoing the repeated cycle including the above steps (1) to (10), each group of adsorbers (T) undergoes any three consecutive steps of the steps (2) to (5), or any two consecutive steps of the steps (3) to (5), and the steps (7) to (10) that are synchronously associated with the steps (2) to (5) respectively require to exist or be canceled simultaneously.

In practical implementation, a quantity of the above steps (2) to (5) and their associated steps (7) to (10) and duration of each step are directly affected by factors such as a type and performance of an adsorbent, a structure of the adsorber, target purity of the product gas, and a flow rate. In other words, it is allowed and necessary to reasonably select all or part of the above steps, but only a step of performing stepwise pressure equalization by changing the paths can be selected.

### Embodiment 1 PSA gas separation process for producing high-purity nitrogen

In this embodiment, two adsorbers T with a same volume are selected and filled with carbon molecular sieves, and purified compressed gas is used as raw gas. The carbon molecular sieves preferentially adsorb oxygen from the raw gas, and nitrogen is gathered at a discharge end and output as product gas. An entire adsorption and separation process follows a four-step working cycle, namely: repressurization and adsorption, ED, depressurization and desorption, and ER. The two adsorbers T operate alternately. When one of the adsorbers T performs the repressurization and adsorption to produce gas, the other adsorber T performs the depressurized adsorption for evacuation and regeneration. At the end of the adsorption, the desorption also ends. The two adsorbers T perform pressure equalization. One of the adsorbers T performs the ED, and the other adsorber T performs the ER simultaneously. This embodiment is intended to produce nitrogen with a purity of 99.999%, and gap gas in an adsorbent bed at the discharge end of the adsorber T contains a large amount of high-purity nitrogen. Therefore:

A pressure equalization process adopts all the four steps of the aforementioned method for stepwise pressure equalization by changing paths.

In a method for applying the aforementioned method for stepwise pressure equalization by changing paths to the PSA gas separation process, each of the adsorbers T adopts a repeated cycle including all the steps (1) to (10) mentioned above. The step (1) includes product gas reflux, and the step (6) uses atmospheric pressure desorption and introduces backward product gas purging.

A PSA gas separation device is of a structure shown in FIG. 12, and all program-controlled valves are pneumatic or electromagnetic valves. The steps of the gas separation process mentioned above are controlled by a PLC.

Preferably, a silencer is disposed at an outlet of discharged gas to lower a noise level, and a buffer tank is disposed at a product gas outlet.

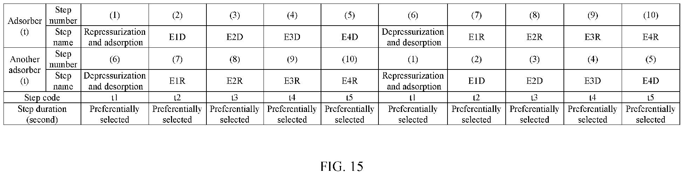

FIG. 15 shows a cyclic process in which the two adsorbers T alternately perform all the steps (1) to (10) mentioned above, with each step including adjustably specified duration.

### Embodiment 2 PSA gas separation process for producing nitrogen with ordinary purity

In this embodiment, two adsorbers T with a same volume are selected and filled with carbon molecular sieves, and purified compressed gas is used as raw gas. The carbon molecular sieves preferentially adsorb oxygen from the raw gas, and nitrogen is gathered at a discharge end and output as product gas. An entire adsorption and separation process follows a four-step working cycle, namely: repressurization and adsorption, ED, depressurization and desorption, and ER. The two adsorbers T operate alternately. When one of the adsorbers T performs the repressurization and adsorption to produce gas, the other adsorber T performs the depressurized adsorption for evacuation and regeneration. At the end of the adsorption, the desorption also ends. The two adsorbers T perform pressure equalization. One of the adsorbers T performs the ED, and the other adsorber T performs the ER simultaneously. This embodiment is intended to produce nitrogen with purity lower than 99.9%, and gap gas in an adsorbent bed at the discharge end of the adsorber T contains a small amount of nitrogen. Therefore:

A pressure equalization process adopts the steps (3) and (4) of the aforementioned method for stepwise pressure equalization by changing paths.

In a method for applying the aforementioned method for stepwise pressure equalization by changing paths to the PSA gas separation process, each of the adsorbers T adopts a repeated cycle including steps excluding the steps (2), (3), (7), and (8) in the steps (1) to (10) mentioned above. The step (1) includes product gas reflux, and the step (6) uses atmospheric pressure desorption and introduces backward product gas purging.

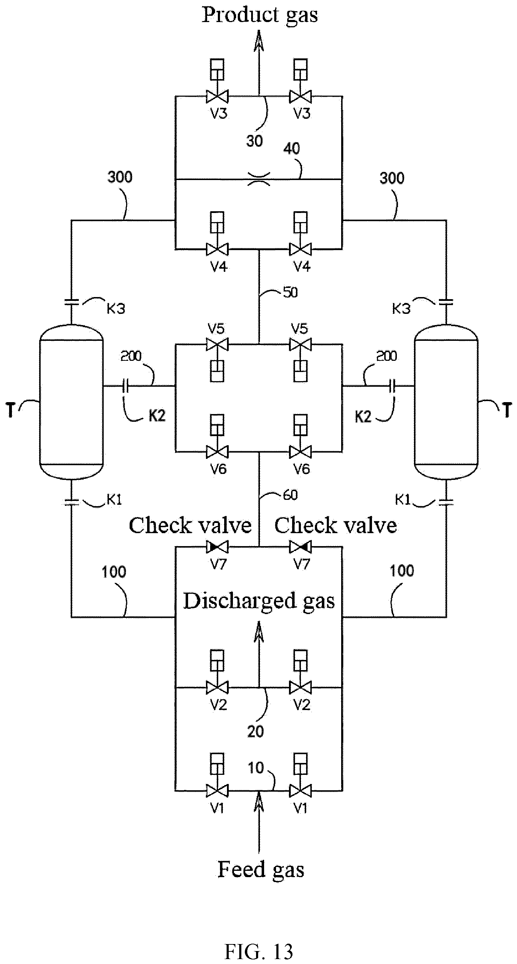

A PSA gas separation device is of a structure shown in FIG. 13. A program-controlled valve V7 is a one-way valve or a check valve, and other program-controlled valves are pneumatic or electromagnetic valves. The steps of the gas separation process mentioned above are controlled by a PLC.

Preferably, a silencer is disposed at an outlet of discharged gas, and a buffer tank is disposed at a product gas outlet.

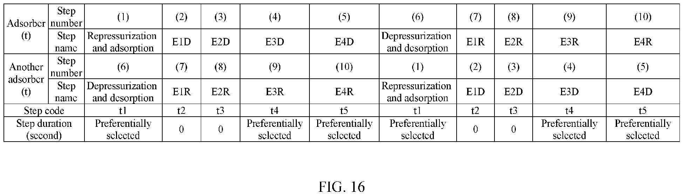

FIG. 16 shows a cyclic process in which the two adsorbers T alternately perform steps excluding the steps (2), (3), (7), and (8) in the steps (1) to (10) mentioned above, with duration of each of the steps (2), (3), (7), and (8) set to 0.

### Embodiment 3 PSA gas separation process for producing oxygen with a purity of 95%

In this embodiment, two adsorbers T with a same volume are selected and filled with zeolite molecular sieves, and purified compressed gas is used as raw gas. The zeolite molecular sieves preferentially adsorb nitrogen from the raw gas, and oxygen is gathered at a discharge end and output as product gas. An entire adsorption and separation process follows a four-step working cycle, namely: repressurization and adsorption, ED, depressurization and desorption, and ER. The two adsorbers T operate alternately. When one of the adsorbers T performs the repressurization and adsorption to produce gas, the other adsorber T performs the depressurized adsorption for evacuation and regeneration. At the end of the adsorption, the desorption also ends. The two adsorbers T perform pressure equalization. One of the adsorbers T performs the ED, and the other adsorber T performs the ER simultaneously. This embodiment is intended to produce the oxygen with the purity of 95%. Because argon is a component that is more difficult to be adsorbed than oxygen, the oxygen with the purity of 95% obtained using a PSA method is already considered high-purity oxygen. An oxygen content in gap gas in an adsorbent bed at the discharge end of the adsorber T is relatively high, and gap gas in the adsorbent bed at the discharge end of the adsorber T contains a small amount of nitrogen. Therefore:

A pressure equalization process adopts the steps (2), (3), and (4) of the aforementioned method for stepwise pressure equalization by changing paths.

In a method for applying the aforementioned method for stepwise pressure equalization by changing paths to the PSA gas separation process, each of the adsorbers T adopts a repeated cycle including steps excluding the steps (2) and (7) in the steps (1) to (10) mentioned above. The step (6) uses atmospheric pressure desorption and introduces backward product gas purging.

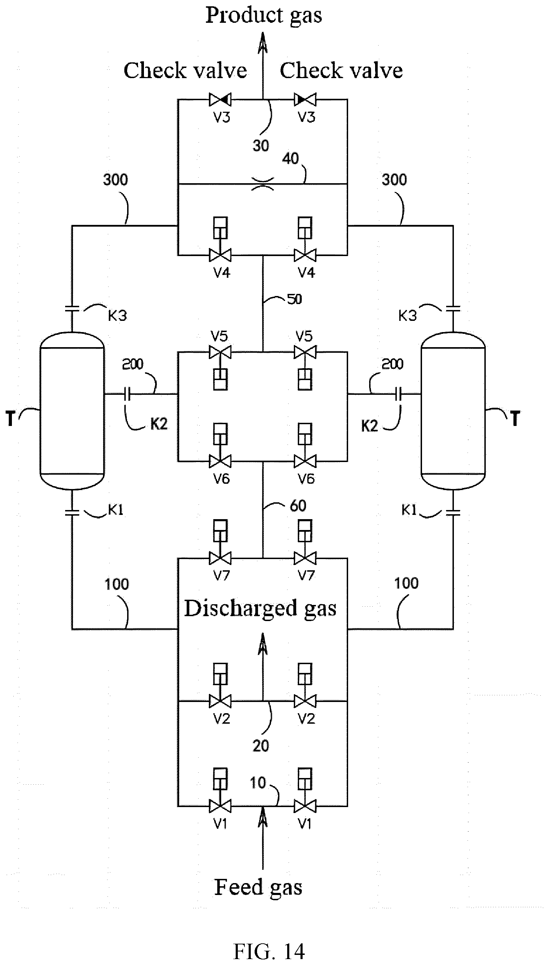

A PSA gas separation device is of a structure shown in FIG. 14. Because PSA-based oxygen production does not require a product gas reflux step in the step (1), a program-controlled valve V3 is a one-way valve or a check valve, and other program-controlled valves are pneumatic or electromagnetic valves. The steps of the gas separation process mentioned above are controlled by a PLC.

Preferably, a silencer is disposed at an outlet of discharged gas, and a buffer tank is disposed at a product gas outlet.

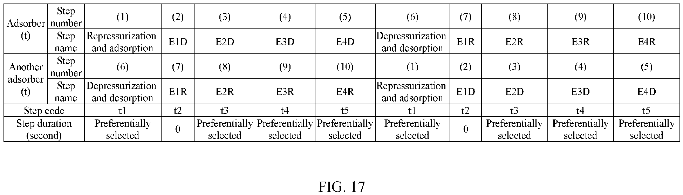

FIG. 17 shows a cyclic process in which the two adsorbers T alternately perform steps excluding the steps (2) and (7) in the steps (1) to (10) mentioned above, with duration of each of the steps (2) and (7) set to 0.

Finally, it should be noted that the above embodiments are merely intended to describe, rather than to limit, the technical solutions of the present disclosure. Although the present disclosure is described in detail with reference to the above embodiments, it is to be appreciated by a person of ordinary skill in the art that modifications or equivalent substitutions may still be made to the specific implementations of the present disclosure, and any modifications or equivalent substitutions made without departing from the spirit and scope of the present disclosure shall fall within the protection scope of the claims of the present disclosure.

## Claims

1. A method for stepwise pressure-equalized pressure swing adsorption (PSA) gas separation by changing paths, wherein, a pressure equalization process of the PSA gas separation method is alternately performed between two groups of adsorbers (T); one group performing an equalization depressurization (ED) process is referred to as an ED adsorber, while the other group performing an equalization repressurization (ER) process simultaneously is referred to as an ER adsorber; each of the adsorbers (T) is provided with a feed port (K1), an intermediate port (K2), and a discharge port (K3); the discharge port (K3) and the intermediate port (K2) of the ED adsorber are gas outlets, and the feed port (K1), the intermediate port (K2), and the discharge port (K3) of the ER adsorber are gas inlets; gas of the ED adsorber flows out synchronously or step by step in sequence through the discharge port (K3) and the intermediate port (K2) of the ED adsorber in the ED process; and in the ER process of the ER adsorber, gas flowing out from the discharge port (K3) of the ED adsorber flows into the ER adsorber step by step in sequence through the discharge port (K3) and the intermediate port (K2) of the ER adsorber, and gas flowing out from the intermediate port (K2) of the ED adsorber flows into the ER adsorber step by step in sequence through the intermediate port (K2) and the feed port (K1) of the ER adsorber, or flows into the ER adsorber through one of the intermediate port (K2) and the feed port (K1) of the ER adsorber.

2. The method for stepwise pressure-equalized PSA gas separation by changing paths according to claim 1, wherein the pressure equalization process comprises following steps (1) to (4), any three consecutive steps of following steps (1) to (4), or any two consecutive steps of following steps (2) to (4):
step (1): connecting the discharge port (K3) of the ED adsorber and the discharge port (K3) of the ER adsorber to perform stepwise pressure-equalized PSA gas separation, wherein the ED adsorber performs an "equalization 1 depressurization (E1D)" step, and the ER adsorber performs an "equalization 1 repressurization (E1R)" step;
step (2): connecting the discharge port (K3) of the ED adsorber and the discharge port (K3) of the ER adsorber, and connecting the intermediate port (K2) of the ED adsorber and the intermediate port (K2) of the ER adsorber to perform the stepwise pressure-equalized PSA gas separation, wherein the ED adsorber performs an "equalization 2 depressurization (E2D)" step, and the ER adsorber performs an "equalization 2 repressurization (E2R)" step;
step (3): connecting the discharge port (K3) of the ED adsorber and the discharge port (K3) of the ER adsorber, and connecting the intermediate port (K2) of the ED adsorber and the feed port (K1) of the ER adsorber to perform the stepwise pressure-equalized PSA gas separation, wherein the ED adsorber performs an "equalization 3 depressurization (E3D)" step, and the ER adsorber performs an "equalization 3 repressurization (E3R)" step; and
step (4): connecting the discharge port (K3) of the ED adsorber and the intermediate port (K2) of the ER adsorber, and connecting the intermediate port (K2) of the ED adsorber and the feed port (K1) of the ER adsorber to perform the stepwise pressure-equalized PSA gas separation, wherein the ED adsorber performs an "equalization 4 depressurization (E4D)" step, and the ER adsorber performs an "equalization 4 repressurization (E4R)" step.

3. The method for stepwise pressure-equalized PSA gas separation by changing paths according to claim 2, wherein the two groups of adsorbers (T) each undergo a repetitive cycle comprising following steps (1) to (10), or any three consecutive steps of following steps (2) to (5), or any two consecutive steps of following steps (3) to (5), and following steps (7) to (10) that are synchronously associated with the steps (2) to (5) respectively require to exist or be canceled simultaneously:
(1) repressurization and adsorption: introducing feed gas to repressurize an adsorbent bed, whereby an easily-adsorbable component is adsorbed and a difficultly-adsorbable component flows out as product gas through the discharge port (K3);
(2) E1D: performing, by the ED adsorber, the "E1D" step, and performing, by the other group of adsorbers (T) as the ER adsorber, the "E1R" step synchronously;
(3) E2D: performing, by the ED adsorber, the "E2D" step, and performing, by the other group of adsorbers (T) as the ER adsorber, the "E2R" step synchronously;
(4) E3D: performing, by the ED adsorber, the "E3D" step, and performing, by the other group of adsorbers (T) as the ER adsorber, the "E3R" step synchronously;
(5) E4D: performing, by the ED adsorber, the "E4D" step, and performing, by the other group of adsorbers (T) as the ER adsorber, the "E4R" step synchronously;
(6) depressurization and desorption: backward discharging gap gas and desorbed gas, to depressurize the adsorber (T) to normal or negative pressure, whereby an adsorbent is regenerated, and the discharged gas is waste gas or is collected and utilized as by-product gas;
(7) E1R: performing, by the ER adsorber, the "E1R" step, and performing, by the other group of adsorbers (T) as the ED adsorber, the "E1D" step synchronously;
(8) E2R: performing, by the ER adsorber, the "E2R" step, and performing, by the other group of adsorbers (T) as the ED adsorber, the "E2D" step synchronously;
(9) E3R: performing, by the ER adsorber, the "E3R" step, and performing, by the other group of adsorbers (T) as the ED adsorber, the "E3D" step synchronously; and
(10) E4R: performing, by the ER adsorber, the "E4R" step, and performing, by the other group of adsorbers (T) as the ED adsorber, the "E4D" step synchronously.

4. A device for stepwise pressure-equalized PSA gas separation by changing paths, comprising at least two groups of adsorbers (T), wherein each of the adsorbers (T) is provided with a feed port (K1), an intermediate port (K2), and a discharge port (K3); the feed port (K1) is connected to a main feed gas pipeline (10) through a first pipeline (100) via a first program-controlled valve (V1), and to a desorbed gas pipeline (20) through the first pipeline (100) via a second program-controlled valve (V2); the discharge port (K3) is connected to a product gas pipeline (30) through a third pipeline (300) via a third program-controlled valve (V3), and a purging pipeline (40) is disposed between the discharge ports (K3); the intermediate port (K2) is connected to a first pressure equalization pipeline (50) through a second pipeline (200) via a fifth program-controlled valve (V5), and to a second pressure equalization pipeline (60) through the second pipeline (200) via a sixth program-controlled valve (V6); the discharge port (K3) is connected to the first pressure equalization pipeline (50) through the third pipeline (300) via a fourth program-controlled valve (V4); the feed port (K1) is connected to the second pressure equalization pipeline (60) through the first pipeline (100) via a seventh program-controlled valve (V7); the second pipeline (200), the fifth program-controlled valve (V5), the first pressure equalization pipeline (50), the sixth program-controlled valve (V6), the second pressure equalization pipeline (60), the third pipeline (300), the fourth program-controlled valve (V4), the first pipeline (100), and the seventh program-controlled valve (V7) form a pressure equalization pipeline network; and mutual connection between the discharge ports (K3) of the two groups of adsorbers (T), between the discharge port (K3) of one group of adsorbers (T) and the intermediate port (K2) of the other group of adsorbers (T), between the intermediate ports (K2) of the two groups of adsorbers (T), and between the intermediate port (K2) of one group of adsorbers (T) and the feed port (K1) of the other group of adsorbers (T) is achieved by opening and closing corresponding program-controlled valves.

5. The device for stepwise pressure-equalized PSA gas separation by changing paths according to claim 4, wherein the adsorber (T) is internally filled with at least one of adsorbents, and the adsorbent is made of a carbon molecular sieve, a zeolite molecular sieve, a 5A molecular sieve, activated carbon, or activated alumina.

6. The device for stepwise pressure-equalized PSA gas separation by changing paths according to claim 4, wherein one group of adsorbers (T) are of a single-stage structure or a two-stage cascaded structure, one group of adsorbers with the single-stage structure comprise one adsorber, and one group of adsorbers with the two-stage cascaded structure comprise two cascaded adsorbers.

7. The device for stepwise pressure-equalized PSA gas separation by changing paths according to claim 6, wherein the intermediate port (K2) of the adsorber (T) with the single-stage structure is connected to a gas diverting and collecting device installed inside the adsorber, and a ventilation port of the gas diverting and collecting device is located at any location between 30% and 80% of total mass of the adsorbent bed.

8. The device for stepwise pressure-equalized PSA gas separation by changing paths according to claim 6, wherein the intermediate port (K2) of the one group of adsorbers (T) with the two-stage cascaded structure is connected to a cascaded pipeline of the two cascaded adsorbers comprised in the one group of adsorbers, and the cascaded pipeline is located at any location between 30% and 80% of total mass of adsorbent beds of the two cascaded adsorbers.
